# EUROPÄISCHE PATENTSCHRIFT

(11) **EP 2 065 594 B1**
(45) Veröffentlichungstag und Bekanntmachung des Hinweises auf die Patenterteilung: **26.02.2014**
(21) Anmeldenummer: 06812668.9
(22) Anmeldetag: 25.09.2006
(51) Int. Cl.: F03D 3/06, F03D 3/00

(54) **WINDKRAFTANLAGE**
WIND POWER PLANT
CENTRALE ÉLECTRIQUE ÉOLIENNE

(30) Priorität: 07.09.2006 KZ 060999
(43) Veröffentlichungstag der Anmeldung: 03.06.2009
(73) Patentinhaber: Buktukov, Nikolay, Almaty 050043 (KZ)
(72) Erfinder: BUKTUKOV, Beisen, Almaty, 050090 (KZ); MOLDABAEVA, Gulnaz, Almaty, 050043 (KZ); ZHAKYP, Aitmukhamed, Almaty, 050043 (KZ)
(74) Vertreter: Jeck, Anton
(86) Internationale Anmeldenummer: PCT/KZ2006/000010
(87) Internationale Veröffentlichungsnummer: WO 2008/030073

(56) Entgegenhaltungen:
- DE-A1-102004 031 105
- GB-A- 2 420 597
- RU-C1- 2 135 824
- RU-C2- 2 170 366
- SU-A1- 5 016
- SU-A1- 992 799
- SU-A1- 1 359 472
- US-B1- 6 283 711
- US-B1- 7 008 171

## Beschreibung

Die Erfindung betrifft ein Windkraftwerk nach dem Oberbegriff des Anspruchs 1, wie z.B. aus DE-A1-10 2004 031 105 bekannt ist.

Das Windkraftwerk kann zur autonomen Energieversorgung von Objekten sowie zur Stromerzeugung für Energiesysteme eingesetzt werden.

Das technische Ergebnis besteht im Folgenden:
- die Erhöhung des Zeit-Leistungsbeiwertes (des Windenergieausnutzungsfaktors) unabhängig von der Richtung und von der Geschwindigkeit des Windes,
- die Vereinfachung des Aufbaus,
- die Verbesserung der Betriebskennlinien,
- die Senkung der Fertigungskosten und der Betriebskosten und
- die Erhöhung der Zuverlässigkeit bei der Steigerung der Einzelleistung des Windkraftwerkes.

Diese Ergebnisse werden folgenderweise erreicht:
Das Kraftwerk umfasst Träger, eine Lagereinheit mit Gehäuse, ein Antriebsrad und getriebene Räder, Stangen, Hebel mit einem Bock, einen L-förmigen Hebel mit einem Belastungsgewicht und Flügel in Form von zwei oder mehreren Segmenten des äußeren Teils eines Hohlringkörpers. Die Flügel weisen obere und untere Kanten sowie innere und äußere Stirnflächen auf. Der äußere Teil des hohlen Ringkörpersegments stellt im Querschnitt einen äußeren Halbkreis dar. Das ermöglicht, diesen Halbkreis im Querschnitt als einen Teil eines Autoreifens mit einer einfacheren Form darzustellen (halbkreisförmig). Die Träger sind starr am Lagergehäuse befestigt. Die Lager sind auf eine unbewegliche Achse aufgesetzt. Jeder Flügel zwischen der inneren und der äußeren Stirnfläche an der Seite der oberen und der unteren Kante ist gelenkig an den Trägern befestigt. Die Stangen sind gelenkig am Flügel zwischen der Mitte und der äußeren Stirnfläche an den oberen und unteren Kanten gekoppelt. Das andere Ende jeder Stange ist von außen gelenkig mit dem Nachbarflügel mittels Hebel mit Bock gekoppelt. Die Böcke sind starr am Flügel befestigt. Ein Flügel ist gelenkig mit einem L-förmigen Trägerarm verbunden. Am Gegenende des Trägerarmes ist ein Belastungsgewicht befestigt. Der Trägerarm mit dem Belastungsgewicht ist am Gehäuse des Antriebsrads befestigt. Das Antriebsrad greift in ein angetriebenes Zahnrad mit kleinerem Durchmesser ein. Dabei ist das angetriebene Zahnrad an einer Gelenkwelle bzw. an einer Welle mit Kugelsicherung befestigt. Die unbewegliche Achse ist innen im Antriebsrad eingebaut. Die Gelenkwelle (oder die Welle mit der Kugelsicherung) ist unten mit einer elektromechanischen Anlage verbunden. Die unbewegliche Achse ist starr an einer Stütze befestigt.

Es ist eine andere Ausführungsvariante des Windkraftwerkes möglich.

Nach dieser Ausführungsform beinhaltet das Kraftwerk Träger, eine Lagereinheit mit Gehäuse, ein Antriebsrad und getriebene Räder, Stangen, L-förmige Hebel mit Böcken, einen L-förmigen Hebel mit einem Belastungsgewicht und Flügel in Form von zwei oder mehreren Segmenten eines äußeren Teils eines Hohlringkörpers. Dabei weisen die Flügel obere und untere Kanten sowie innere und äußere Stirnflächen auf. Die Träger sind starr am Lagergehäuse befestigt. Die Lager sind auf eine unbewegliche Achse aufgesetzt. Jeder Flügel zwischen der inneren und der äußeren Stirnfläche ist außen gelenkig mit dem Träger mittels der L-förmigen Hebel mit Böcken verbunden. Die Böcke sind starr am Flügel befestigt. Der Träger ist gelenkig mit einem L-förmigen Hebel mit Böcken in der Mitte gekoppelt. Die Enden der L-förmigen Hebel mit Böcken sind gelenkig mit Stangen gekoppelt. Einer der Flügel ist gelenkig mit einem L-förmigen Trägerarm verbunden. Am Gegenende des Trägerarmes ist ein Belastungsgewicht befestigt. Der Trägerarm mit dem Belastungsgewicht ist am Lagergehäuse befestigt. Ein Antriebsrad ist am Lagergehäuse unten starr befestigt. Das Antriebsrad greift über ein angetriebenes Rad mit kleinerem Durchmesser in eine Gelenkwelle oder in eine Welle mit Kugelsicherung ein. Die unbewegliche Achse ist innen im Antriebsrad eingebaut. Die Gelenkwelle (oder die Welle mit Kugelsicherung) ist unten mit einer elektromechanischen Anlage verbunden. Die unbewegliche Achse ist an einer Stütze befestigt.

Es ist ein Wind-Rotor-Kraftwerk "Boni-SchHV" (Patent PK Nr. 5595) bekannt, welches aus Wind-Rotor-Modulen besteht. Die Wind-Rotor-Module umfassen Leitapparate und senkrechte Flügel-Wind-Rotoren. Diese sind ringförmig ausgeführt. Die Anzahl der Flügel und die Durchmesser variieren je nach der Höhe in Übereinstimmung mit der Hellmann-Formel. Die Generatorbaugruppe enthält eine oder mehrere Stufen, die mit der Wind-Rotor-Welle verbunden sind. Dieses Wind-Rotor-Kraftwerk weist folgende Mängel auf:
- hoher Metallaufwand,
- die Notwendigkeit, eine hohe Fertigungsklasse zu erreichen, um die Funktion des Wind-Rotor-Kraftwerkes bei großen Windgeschwindigkeiten sicherzustellen, was seinerseits eine wesentliche Verteuerung verursacht und
- Betriebsunfähigkeit bei niedrigen Windgeschwindigkeiten.

Es ist ein Windmotor nach dem Savonius-System bekannt (Patent PK Nr. 3230), welcher zwei Halbzylinder-Flügel enthält. Die Halbzylinder-Flügel sind zwischen Platten angeordnet und weisen Außen- und Innenkanten auf. Sie sind kinematisch fest mit einer Welle und gelenkig mit den Flügeln verbunden. Die Flügel sind an ihren Außenkanten mit Belastungsgewichten versehen. Dieser Windmotor weist einen wesentlichen Mangel auf. Um die Leistung zu erhöhen, muss der Durchmesser um mehr als 0,5 m vergrößert werden. Wenn die Flügelkanten luvwärts gedreht werden, kommt unter der Winddruckwirkung eine unkontrollierbare Verschiebung der Halbzylinder zustande. Hier entsteht ein Trägerstoß. Das alles setzt eine kompliziertere Konstruktion voraus und macht die Einrichtung weniger zuverlässig. Die Reduzierung des Durchmessers der Halbzylinder bedingt zudem einen Leistungsrückgang und eine Minderung des Bereichs der Windarbeitsgeschwindigkeiten.

Es ist Aufgabe dieser Erfindung ein Windkraftwerk (WKW) zu entwickeln, welches Folgendes ermöglicht:
- den Zeit-Leistungsbeiwert (den Windenergieausnutzungsfaktor) zu erhöhen (den Bereich der Windarbeitsgeschwindigkeiten zu erweitern),
- eine konstante Leistung des elektrischen Kraftwerkes unabhängig von der Geschwindigkeit und von der Richtung des Windes sicherzustellen,
- die Konstruktion zu vereinfachen und
- die Betriebszuverlässigkeit zu erhöhen.

Das verursacht, die Fertigungskosten zu senken und den Betriebsaufwand zu vermindern.

Die gestellte Aufgabe wird durch die Merkmale des Anspruchs 1 gelöst.

Das technische Ergebnis wird in folgender Weise erreicht:
Das Windkraftwerk umfasst Träger, eine Lagereinheit mit Gehäuse, ein Antriebsrad und ein getriebenes Rad, Stangen, Hebel mit einem Bock, einen L-förmigen Hebel mit einem Belastungsgewicht und Flügel in Form von zwei oder mehreren Segmenten eines äußeren Teils eines Hohlringkörpers, Dabei weisen die Flügel obere und untere Kanten sowie innere und äußere Stirnflächen auf.

In diesem Windkraftwerk stellt der äußere Teil des hohlen Ringkörpersegments einen Teil eines Autoreifens mit einer einfacheren Form (Halbkreis) dar. Die Träger sind starr an Lagern befestigt. Die Lager sind auf eine unbewegliche Achse aufgesetzt. Jeder Flügel zwischen der inneren und der äußeren Stirnfläche an der Seite der oberen und der unteren Kante ist gelenkig an den Trägern befestigt. Jeder Flügel zwischen der inneren und der äußeren Stirnfläche an der oberen und der unteren Kante ist gelenkig durch Stangen mit einem Nachbarflügel mittels eines Hebels mit Böcken außen verbunden. Die Böcke sind starr mit dem Flügel gekoppelt. Ein Flügel ist gelenkig mit einem L-förmigen Trägerarm verbunden. Am Gegenende des Trägerarmes ist ein Belastungsgewicht befestigt. Der Trägerarm ist am Gehäuse des Antriebsrads befestigt.

Das Antriebsrad greift in ein angetriebenes Zahnrad mit kleinerem Durchmesser ein. Dabei ist das angetriebene Zahnrad an einer Gelenkwelle bzw. an einer Welle mit Kugelsicherung befestigt. Die unbewegliche Achse ist innen im Antriebsrad eingebaut. Die Gelenkwelle (oder die Welle mit Kugelsicherung) ist unten mit einer elektromechanischen Anlage verbunden. Die unbewegliche Achse ist starr an einer Stütze befestigt.

Das technische Ergebnis kann auch bei einer anderen Ausführungsform erreicht werden.

Nach dieser Ausführungsform beinhaltet das Windkraftwerk Träger, eine Lagereinheit, ein Antriebsrad und getriebene Räder, Stangen, L-förmige Hebel mit Böcken, einen L-förmigen Hebel mit einem Belastungsgewicht und Flügel in Form von zwei oder mehreren Segmenten eines äußeren Teils des Hohlringkörpers. Dabei weisen die Flügel obere und untere Kanten sowie innere und äußere Stirnflächen auf. Die Träger sind starr am Lagergehäuse befestigt. Die Lager sind auf die unbewegliche Achse aufgesetzt. Jeder Flügel zwischen der inneren und der äußeren Stirnfläche ist außen gelenkig mit dem Träger mittels der L-förmigen Hebel mit Böcken verbunden. Die Böcke sind starr am Flügel befestigt. Die L-förmigen Hebel mit Böcken sind gelenkig mittig am Träger befestigt. Die Enden der L-förmigen Hebel mit Böcken sind gelenkig mit Stangen gekoppelt. Einer der Flügel ist gelenkig mit einem L-förmigen Trägerarm mit Belastungsgewicht befestigt. Der Trägerarm mit dem Belastungsgewicht ist an der Lagereinheit befestigt. Das Antriebsrad ist am Lagergehäuse unten starr befestigt. Das Antriebsrad greift über das angetriebene Rad mit kleinerem Durchmesser in eine Gelenkwelle oder in eine Welle mit Kugelsicherung ein. Die unbewegliche Achse ist innen im Antriebsrad eingebaut. Die Gelenkwelle (oder die Welle mit Kugelsicherung) ist unten mit einer elektromechanischen Anlage verbunden. Die unbewegliche Achse ist an einer Stütze befestigt.

Die Ursache-Wirkung-Beziehung zwischen den wesentlichen Merkmalen der Erfindung und den erreichten Ergebnissen besteht im Folgenden: Beim Einsatz der genannten Merkmale nimmt der zeitmäßige Windenergieausnutzungsfaktor zu. Das heißt, dass das WKW im Geschwindigkeitsbereich von 1 bis 90 m/s arbeiten wird.

Als Ergebnis arbeitet das WKW um das Dreifache länger (dreimal die übliche Tageszahl), somit wird auch die Stromerzeugung um das Dreifache höher sein. Außerdem kann die Einzelleistung der Anlage wesentlich erhöht werden.

Das wird dadurch erreicht, dass die Flügelfläche bei geringen Windgeschwindigkeiten vergrößert wird. Bei der Erhöhung der Windgeschwindigkeiten wird die Flügelfläche vermindert, und zwar dadurch, dass die Flügel rings um die Scharnierhalterung am Träger geschlossen werden.

Bei stürmischen Windstößen werden die Flügel durch die Wirkung der Zentrifugalkraft auf die Belastungsgewichte geschlossen. Dabei nimmt das WKW die Gestalt der äußeren Hälfte eines hohlen Ringkörpers an.

Die Betriebssicherheit wird sowohl durch die einfache Bauweise als auch durch die Nichtdrehbarkeit und durch das Vorhandensein von einer Kugelsicherung der Windkraftwerk-Welle und/oder von einer Kardanwelle mit der elektrochemischen Anlage sichergestellt.

Die Erfindung wird anhand von zwei in den Zeichnungen dargestellten Ausführungsbeispielen näher erläutert. Es zeigen:
- Fig. 1: die Gesamtansicht eines Dreiflügel-Windkraftwerks, wobei die Flügel an der Innenkante der Träger befestigt sind.
- Fig. 2: die Gesamtansicht eines Dreiflügel-Windkraftwerk, wobei die Flügel außen am Träger befestigt sind,
- Fig. 3: die Draufsicht und den Schnitt eines Flügels eines Dreiflügel-Windkraftwerks,
- Fig. 4: die Gesamtansicht eines Vierflügel-Windkraftwerks, wobei die Flügel mit ihrer Innenkante an den Trägern festgemacht sind,
- Fig. 5: die Draufsicht auf das Vierflügel-Windkraftwerk,
- Fig. 6: das Befestigungsschema des L-förmigen Trägerarmes mit Belastungsgewicht, welches das Öffnen und das Schließen der Flügel (der Windaufnahmeflächen) bei Änderung der Windgeschwindigkeit sicherstellt und
- Fig. 7: die Ansicht der Drei- und der Vierflügel-Windkraftwerke in geschlossener Stellung.

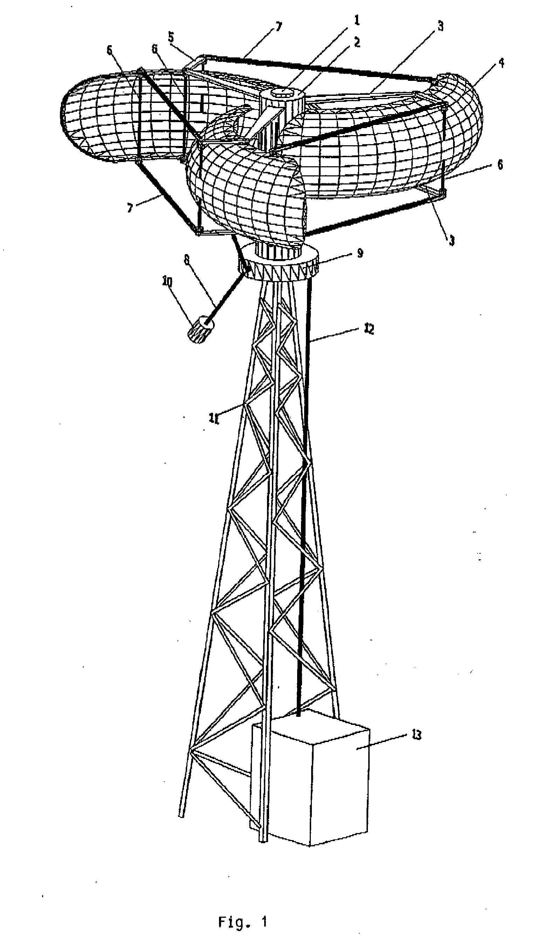

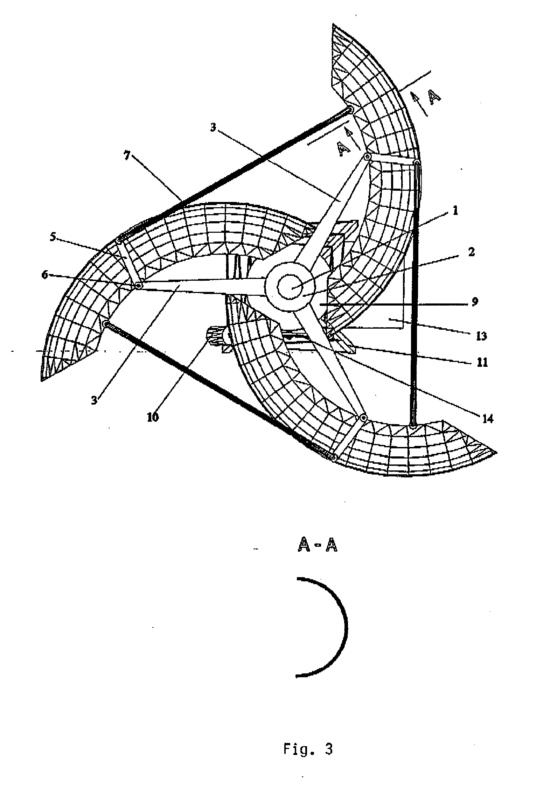

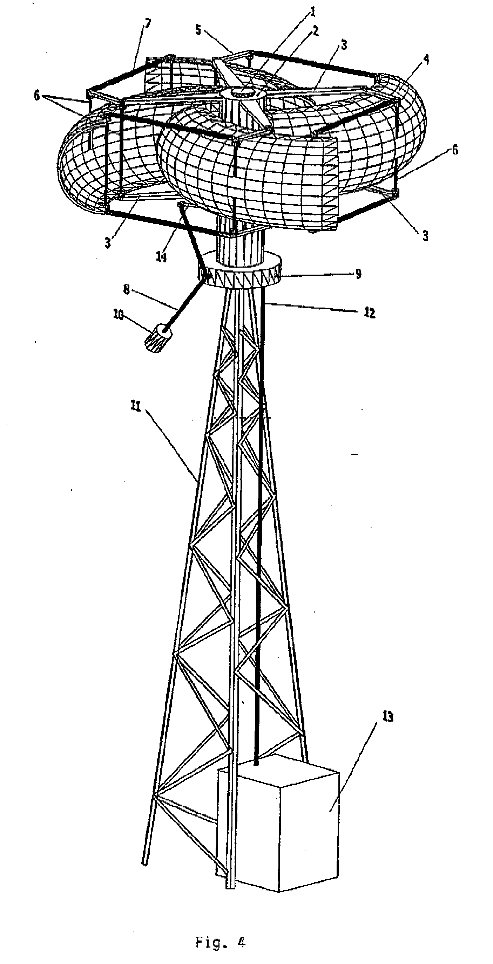

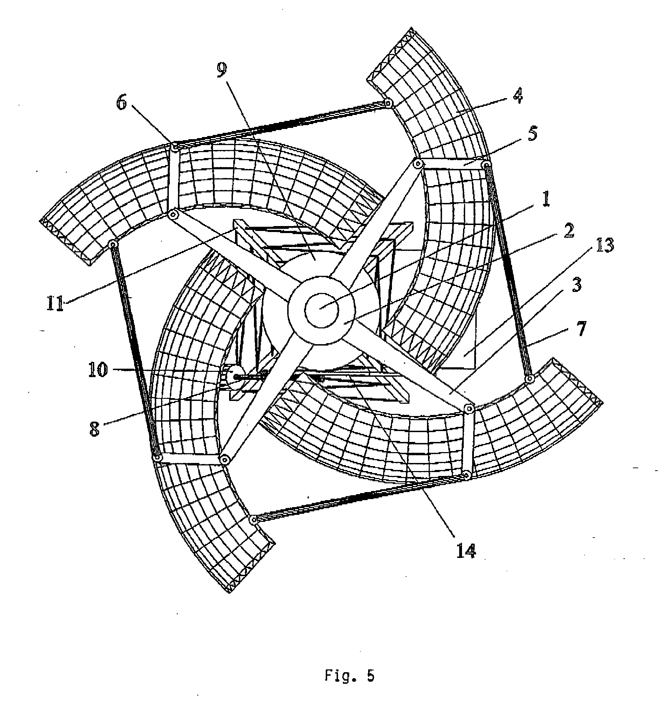

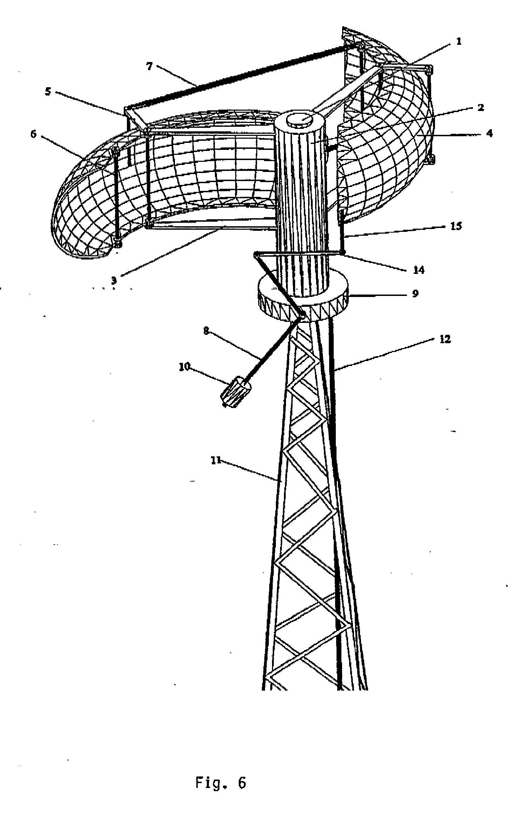

Das Windkraftwerk (Fig. 1) besteht aus einer unbeweglichen Achse 1, an der eine Lagereinheit 2 befestigt ist. Träger 3 sind starr an der Lagereinheit 2 befestigt. Ein Flügel 4 ist an die Träger 3 zwischen der äußeren und der inneren Stirnfläche gelenkig befestigt. Die Flügel 4 sind in Form von einem Segment eines hohlen Ringkörpers (des Torus) ausgebildet (Fig. 3). Hebel 5 mit Bock 6 sind gelenkig mit den Trägern 3 gekoppelt. An den anderen Enden der Hebel 5 sind Stangen 7 gelenkig angebracht (Fig. 1, 4, 5). Die Gegenenden der Stangen 7 sind an seinen oberen und unteren Kanten gelenkig mit dem Nachbarflügel 4 gekoppelt. Die Böcke 6 sind starr am Flügel 4 befestigt. Ein L-förmiger Trägerarm 8 ist gelenkig am Gehäuse 9 eines Antriebsrads festgemacht (Fig. 6). Das obere Ende des Trägerarms 8 ist gelenkig mit einem der Flügel 4 mittels Drahtseile 14 und 15 verbunden. Am unteren Ende des Trägerarms 8 ist ein Belastungsgewicht 10 befestigt. Das untere Ende der unbeweglichen Achse 1 (Fig. 1, 2, 4) ist starr mit einer Stütze 11 verbunden. Das Antriebsrad ist im Eingriff mit einem angetriebenen Rad (in den Zeichnungen nicht abgebildet). Dabei weist das angetriebene Rad einen kleineren Durchmesser auf und ist auf einer Gelenkwelle 12 fest aufgesetzt. Das untere Ende der Gelenkwelle 12 ist mit einer elektromechanischen Anlage 13 verbunden.

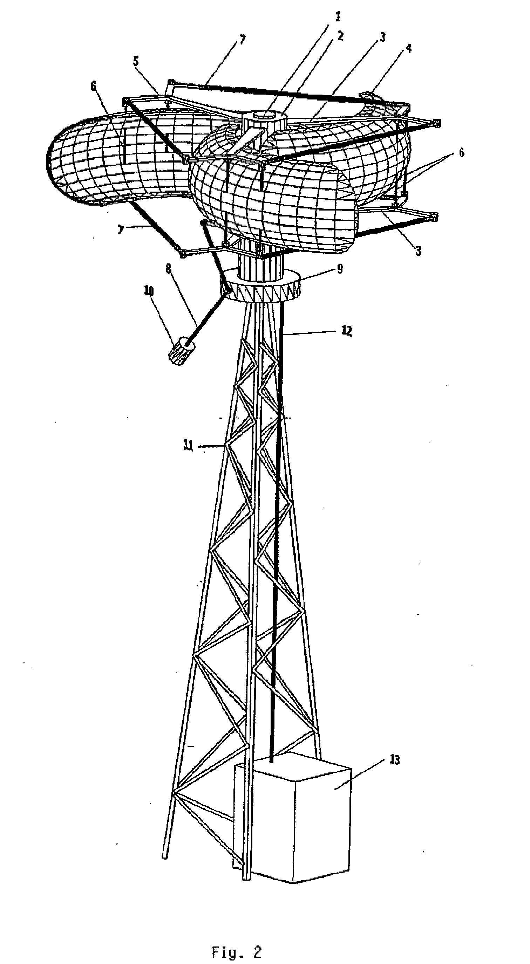

Gemäß der zweiten Ausführungsform (Fig. 2) wird der Flügel 4 an einem Träger 3 festgemacht, und zwar außen zwischen der inneren und der Außenstirnfläche. Die Befestigung erfolgt mittels der L-förmigen Hebel 5 mit Böcken 6. An beiden Enden der L-förmigen Hebel 5 mit Böcken 6 sind Stangen 7 gelenkig gekoppelt. Die L-förmigen Hebel 5 mit Böcken 6 sind gelenkig mittig an Trägern 3 befestigt. Die Böcke 6 sind starr am Flügel 4 befestigt. Die Befestigung der unbeweglichen Achse 1, die Sicherung des Trägerarmes 8 mit Belastungsgewicht 10 und die Verbindung mit der elektromechanischen Anlage 13 erfolgen ähnlich wie bei der ersten Ausführungsform.

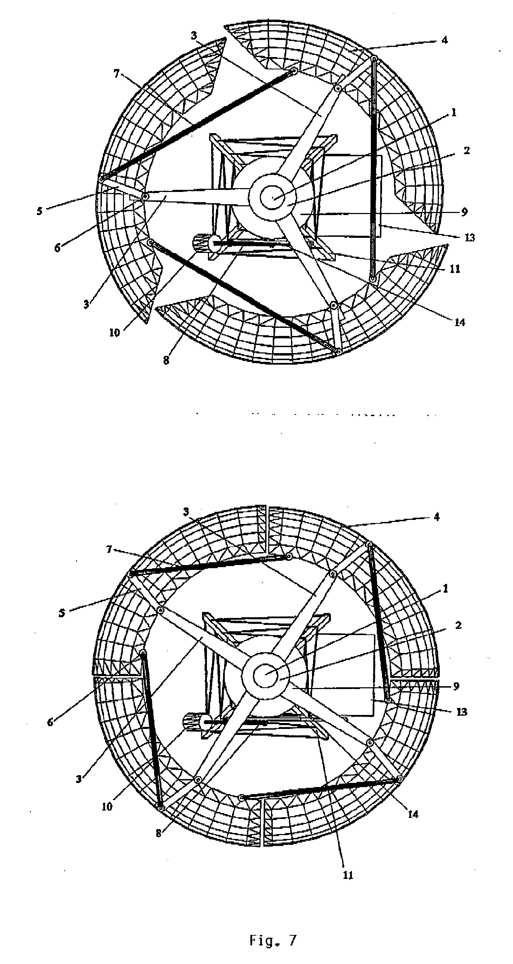

Das Windkraftwerk wird in folgender Weise betrieben:
Der Windstrom trifft die Flügel 4 und lässt somit die Flügel 4, die Träger 3 und die Antriebsräder auf den Lagern rings um die unbewegliche Achse 1 drehen. Die Drehung des Antriebsrads wird mittels eines angetriebenen Rads und einer Gelenkwelle (oder der Kugelsicherung) 12 an die elektromechanische Anlage 13 weitergeleitet. Wird die Windgeschwindigkeit höher, so fängt das Belastungsgewicht 10 an, durch die Fliehkraftwirkung sich von der Dreheachse zu entfernen. Das bedingt eine Ablenkung des Trägerarms 8 rings um die Scharnierhalterung, Der Trägerarm 8 zieht den Flügel 4 mit oder schiebt ihn mittels der Zugstangen 14 und 15 vor. Dies verursacht eine Verlagerung aller Flügel 4 rings um die Scharnierhalterung an den Trägern 3. Bei stürmischen Windstößen schließen sich die Flügel 4 und nehmen dadurch die Form von einem Ringkörper (Torus) an (Fig. 7).

Ist kein Wind vorhanden, so kommt das Belastungsgewicht 10 unter der Schwerkraftwirkung nach unten. Die Flügel 4 öffnen vollständig mittels des Trägerarmes 8 und über Zugstangen 14 und 15.

Die Funktionsweise des Windkraftwerks nach der zweiten Ausführungsform ist ähnlich.

## Patentansprüche

1. Windkraftwerk mit einem Belastungsgewicht, Trägern und Flügeln mit Kanten, wobei
- die Flügel (4) in Form von einem oder mehreren Segmenten eines äußeren Teils eines Ringkörpers ausgebildet sind und obere und untere Kanten sowie innere und äußere Stirnflächen aufweisen,
- jeder Flügel (4) zwischen der inneren und der äußeren Stirnfläche an der Seite der oberen und unteren Kante gelenkig an den Trägern (3) befestigt ist,
- die Träger (3) starr an einem Lagergehäuse (2) befestigt sind,
- Lager ihrerseits auf eine unbewegliche Achse (1) aufgesetzt sind, **dadurch gekennzeichnet, dass**:
- Stangen (7) gelenkig mit dem Flügel (4) zwischen der Mitte und der äußeren Stirnfläche an der oberen und unteren Kante gekoppelt sind,
- das andere Ende jeder Stange (7) von außen gelenkig über einen Hebel (5) mit Bock (6) mit dem Nachbarflügel (4) gekoppelt ist,
- der Bock (6) starr am Flügel (4) befestigt ist,
- ein Flügel (4) gelenkig mit einem L-förmigen Trägerarm (8) verbunden ist,
- am Gegenende des Trägerarms (8) das Belastungsgewicht (10) befestigt ist,
- der Trägerarm (8) mit dem Belastungsgewicht (10):
- am Gehäuse (2) eines Antriebsrads oder
- am Lagergehäuse (2)
befestigt ist,
- das Antriebsrad in ein angetriebenes Zahnrad mit kleinerem Durchmesser eingreift, wobei das angetriebene Zahnrad an einer Gelenkwelle (12) bzw. an einer Welle mit Kugelsicherung befestigt ist,
- die unbewegliche Achse (1) innen im Antriebsrad eingebaut ist,
- die Gelenkwelle (12) oder die Welle mit Kugelsicherung unten mit einer elektromechanischen Anlage (13) verbunden ist und
- die unbewegliche Achse (1) starr an einer Stütze (11) befestigt ist.

## Claims

1. A wind power system, having a loading weight, supports, and vanes with edges,
wherein
- the vanes (4) are embodied in the form of one or more segments of an outer part of an annular body and have upper and lower edges as well as inner and outer end faces;
- each vane (4) is secured between the inner and outer end faces on the side of the upper and lower edges in articulated fashion on the supports (3);
- the supports (3) are secured rigidly on a bearing housing (2);
- bearings are in turn placed on an immovable axle (1), **characterized in that**
- rods (7) are coupled in articulated fashion to the vane (4) between the center and the outer end face on the upper and lower edges;
- the other end of each rod (7) is coupled from outside to the neighboring vane (6) in articulated fashion via a lever (6) with a bearer (6);
- the bearer (6) is secured rigidly to the vane (4);
- one vane (4) is connected in articulated fashion to an L-shaped support arm (8);
- the loading weight (10) is secured to the opposite end of the support arm (8);
- the support arm (8) with the loading weight (10) is secured:
- to the housing (2) of a drive wheel or
- to the bearing housing (2);
- the drive wheel engages a driven gear wheel of small diameter, and the driven gear wheel is secured to a cardan shaft (12) or to a shaft with bulletproofing;
- the immovable axle (1) is built into the inside of the drive wheel;
- the cardan shaft (12) or the shaft with bulletproofing is connected on the bottom to an electromechanical system (13); and
- the immovable axle (1) is secured rigidly to a stanchion (11).

## Revendications

1. Centrale électrique éolienne comportant un poids de lestage, des supports et des ailettes dotées de bords, dans laquelle :
- les ailettes (4) sont réalisées sous la forme d'un ou plusieurs segments d'une partie extérieure d'un corps annulaire et présentent des bords supérieur et inférieur ainsi que des faces frontales intérieure et extérieure,
- chaque ailette (4) est fixée de manière articulée aux supports (3) du côté du bord supérieur et du bord inférieur entre la face frontale intérieure et la face frontale extérieure,
- les supports (3) sont fixés de manière rigide à un logement de palier (2),
- des paliers sont eux-mêmes positionnés sur un axe fixe (1),
**caractérisée en ce que**
- des tiges (7) sont couplées de manière articulée à l'ailette (4) sur le bord supérieur et le bord inférieur entre le milieu et la face frontale extérieure,
- l'autre extrémité de chaque tige (7) est couplée par l'extérieur de manière articulée à l'ailette (4) voisine au moyen d'un levier (5) avec patte d'attache (6),
- la patte d'attache (6) est fixée de manière rigide à l'ailette (4),
- une ailette (4) est reliée de manière articulée à un bras porteur (8) en forme de L,
- le poids de lestage (10) est fixé à l'extrémité opposée du bras porteur (8),
- le bras porteur (8) muni du poids de lestage (10) est fixé :
- au carter (2) d'une roue menante ou
- au logement de palier (2),
- la roue menante s'engage dans une roue dentée menée de plus petit diamètre, la roue dentée menée étant fixée à un arbre articulé (12) ou à un arbre avec bille d'arrêt,
- l'axe fixe (1) est monté à l'intérieur de la roue menante,
- l'arbre articulé (12) ou l'arbre avec bille d'arrêt est relié en partie basse à une installation électromécanique (13) et
- l'axe fixe (1) est fixé de manière rigide à un pylône (11).
